# EUROPÄISCHE PATENTSCHRIFT

(11) **EP 1 161 458 B1**
(45) Veröffentlichungstag und Bekanntmachung des Hinweises auf die Patenterteilung: **18.08.2004**
(21) Anmeldenummer: 00903501.5
(22) Anmeldetag: 07.01.2000
(51) Int. Cl.: C08B 31/12, C08B 11/12, C08B 37/14

(54) **MALATYL-POLYSACCHARIDE, DEREN HERSTELLUNG UND VERWENDUNG**
MALATYL POLYSACCHARIDES, THEIR PRODUCTION AND THEIR USE
POLYSACCHARIDES DE MALATYLE, LEUR PRODUCTION ET LEUR UTILISATION

(30) Priorität: 12.01.1999 DE 19900764
(43) Veröffentlichungstag der Anmeldung: 12.12.2001
(73) Patentinhaber: Lochner, Thomas, 48155 Münster (DE); Lazik, Waldemar, 01827 Graupa (DE)
(72) Erfinder: LAZIK, Waldemar, D-01827 Graupa (DE)
(74) Vertreter: Uhlemann, Henry, Dipl.-Chem.
(86) Internationale Anmeldenummer: PCT/DE2000/000065
(87) Internationale Veröffentlichungsnummer: WO 2000/042075

(56) Entgegenhaltungen:
- US-A- 2 415 044
- US-A- 5 597 811
- US-A- 5 770 711

## Beschreibung

Die Erfindung betrifft Malatyl-Polysaccharide aus Polysacchariden und cis-Epoxysuccinat oder anderen Epoxycarbonsäuren, Verfahren zu deren Herstellung sowie deren Anwendung in Waschmitteln, als Verdickungsmittel, als Komplexierungsmittel für Kationen oder organische Verbindungen oder als Ionentauscher für wäßrige Systeme oder als Hilfsstoff in pharmazeutischen Anwendungen (z.B. Tablettensprengmittel, Suspensionsstabilisator etc.) oder als Inhaltsstoff in Hygieneartikeln und medizinischen Bereichen.

Allgemeine Umsetzungen von Stärke oder Cellulose mit Epoxiden (Oxiranen), z.B. mit Ethylenoxid oder Propylenoxid, zu Hydroxyalkylderivaten sind seit längerem bekannt und in vielen Veröffentlichungen beschrieben worden (z.B. K. Engelskirchen in Methoden der organischen Chemie, Bd. E20, S. 2135 ff., 1987). Hydroxyalkylstärken oder - cellulosen sind nicht-ionische Derivate, die häufig in elektrolytreichen Systemen z.B. als Verdickungsmittel verwendet werden, da sie in wäßrigen Systemen weitgehend unempfindlich (z.B. ohne Viskositätsverluste) auf Elektrolyte (Salze) reagieren.

US 5,597,811 offenbart Oxiran-Carboxylsäurederivate, erhältlich durch Umsetzung von Polyglucosaminen mit Epoxyverbindungen. Dabei wird die Reaktion der Amingruppe mit der Epoxygruppe der Epoxyverbindung genutzt.

Nach US 5,770,711 A1 werden Polysaccharide in einer alkalischen oder schwach sauren, wässrigen alkoholischen Lösung durch Hinzufügen eines Überschusses aliphatischer Polycarbonsäuren mit einer Epoxygruppe umgesetzt. Die Verfahrensbedingungen sind dabei so gewählt, dass nicht nur die Epoxygruppe, sondern ebenfalls die Säuregruppen an der Reaktion mit dem Polysaccharid teilnehmen und es damit zu Ester-Bildungen kommt und vernetzte bzw. unlösliche Endprodukte resultieren.

Umsetzungen von Stärke oder Cellulose zu ionischen Derivaten sind ebenfalls häufig beschrieben worden (siehe u.a. R.L. Davidson, Handbook of Water-Soluble Gums and Resins, Kap. 22, 1980). Die ionischen Derivate haben den Vorteil, daß sie in kaltem Wasser löslich sind und damit einen großen Anwendungsbereich abdecken. Carboxymethyl-Derivate (z.B. Carboxymethylstärke oder - cellulose) und oxidierte Polysaccharide sind die bekanntesten Vertreter der ionischen Derivate. Diese Derivate haben nur eine ionische Gruppe (Carboxylgruppe) pro Substituent und eignen sich nicht vorteilhaft z.B. als Co-Builder in Waschmitteln oder als Wasserenthärtungsmittel. Daneben sind auch Ester der Adipinsäure (Adipate), Bernsteinsäure (Succinate) oder Maleinsäure geläufig, die aus der Veresterung der Dicarbonsäure mit der Glucose der Stärke oder Cellulose resultieren. Dabei wird jedoch eine funktionelle Gruppe der beiden Carboxylgruppen eingebüßt. Das ist von großem Nachteil, wenn dieses Derivat als Komplexierungsmittel für mehrwertige Ionen (z.B. Calcium) dienen soll. Beispielsweise wäre diese Komplexierungseigenschaft bei Wasserenthärtungsmitteln vorteilhaft.

Diesen Vorteil würde ein Derivat nicht einbüßen, das aus Maleinsäureanhydrid und Stärke (oder Cellulose) in einer Michael-Addition im alkalischen Medium hergestellt wird. Hierbei reagiert eine Hydroxylgruppe der Glucose mit der Doppelbindung der

Maleinsäure unter Bildung eines Ethers und unter Erhalt der beiden funktionellen Carboxylgruppen. Es wird dabei ein Bernsteinsäureether der Stärke gebildet (eine Succinylstärke; nicht Stärkesuccinat, letzteres wäre ein Bernsteinsäureester). Der Nachteil hierbei ist, daß die Ausbeuten der Maleinsäure gering sind (üblicherweise unter 10%) und der erreichbare Substitutionsgrad klein ist. Somit ist es nicht wirtschaftlich und in der Wirkung nicht ausreichend effizient. Additionen an eine Doppelbindung mit Glucose oder anderen Kohlenhydraten sind im Allgemeinen nicht effizient. Außerdem reagiert in dieser Michael-Reaktion unter alkalischen Bedingungen das Maleinsäureanhydrid mit Stärke zum Maleinsäureester (Stärkemaleinat), wobei auch hierbei eine der beiden Carboxylgruppen als ionische Gruppe verloren geht (s. R.L. Davidson, Handbook of Water-Soluble Gums and Resins, Kap. 22, S. 22-40 ff., 1980). In US-A-2415044 werden Michaeladditionen zwischen Cellulose und ungesättigten Dicarbonsäuren offenbart.

Gerade in Verbindung mit der natürlichen Basis von Polysacchariden besteht nach wie vor ein hoher Bedarf an Polysaccharidderivaten mit vielfältigsten funktionellen Eigenschaften. Die Aufgabe der Erfindung besteht deshalb in der Schaffung von Polysaccharidderivaten, bei denen beide Carboxylgruppen erhalten bleiben.

Überrraschend wurden neue Malatyl-Polysaccharide gefunden, die aus Polysacchariden und cis-Epoxysuccinat oder anderen Epoxycarbonsäuren herstellbar sind und bei deren Umsetzung die Carboxylgruppen erhalten bleiben. Es ist aber auch möglich, statt nativer Polysaccharide die Derivate von Polysacchariden zu verwenden. Daraus können dann Produkte mit multivarianten Eigenschaften resultieren.

Die Herstellung der Malatyl-Polysacchariden kann sowohl mit festem Epoxysuccinat als auch mit einer Epoxysuccinatlösung realisiert werden. Dies hat den Vorteil, daß man nicht von dem reinen Epoxysuccinat ausgehen muß, sondern es in situ aus anderen preiswerten Ausgangsstoffen (in einem bekannten Verfahren) herstellen kann. So ist es z.B. möglich das cis-Epoxysuccinat aus Maleinsäure und Wasserstoffperoxid oder aus Hydrochinon und Wasserstoffperoxid herzustellen. Die Lösung kann im Vakuum eingeengt werden und die konzentrierte Epoxysuccinatlösung wird dann als Reagenz zur alkalisierten Stärke in einer alkoholischen oder acetonischen Suspension zugegeben.

Eine vorteilhafte, erfindungsgemäße Verbindung ist Malatylstärke, ein Äpfelsäureether der Stärke der allgemeinen Formel (I).

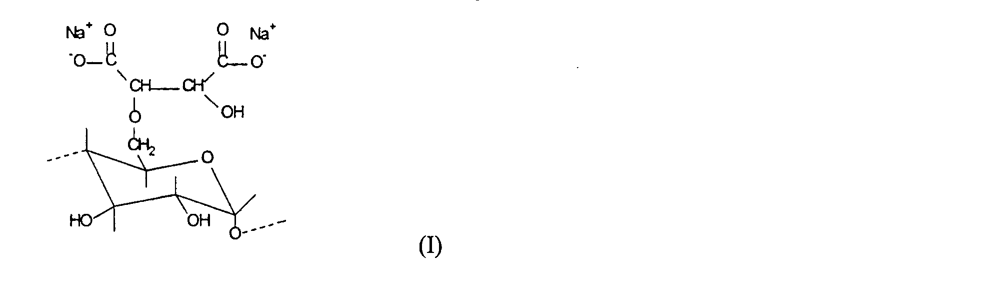

Die Malatylstärke wird dabei aus der Umsetzung von cis-Epoxysuccinat (Dinatriumsalz der cis-Epoxybernsteinsäure) mit Stärke, in einer alkalischen Suspension, erhalten. Die Verwendung der Epoxybernsteinsäure selbst ist ebenfalls möglich, jedoch muß hierbei im Alkalisierungsschritt vorher eine äquivalente Menge an Lauge mehr zugesetzt werden. Schema:

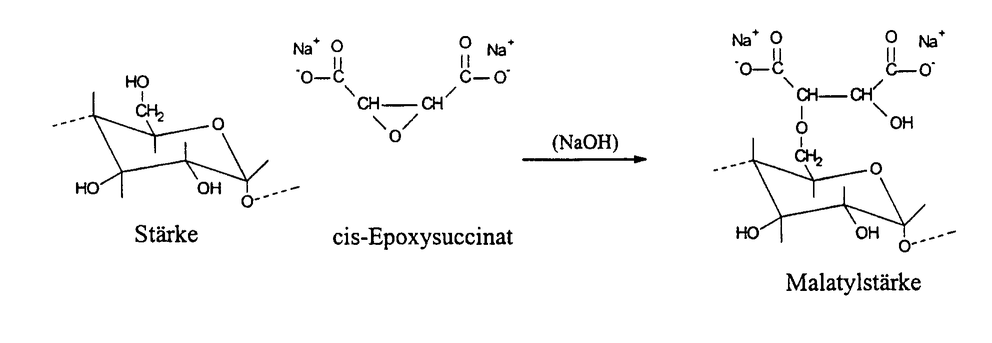

Die Herstellung von Epoxysuccinat selbst (und anderen Epoxycarbonsäuren) ist an mehreren Stellen beschrieben worden (DE 2213260; DE 2347224; G.B. Payne, P.H. Williams, J. Org. Chem., 24, S. 54 ff., 1959; G.B. Payne, J. Org. Chem., 24, S. 2048 ff., 1959; E. Weitz, H. Schobbert, H. Seibert, Chem. Ber., 68, S. 1163, 1935).
Die Umsetzung des cis-Epoxysuccinates oder anderer Epoxycarbonsäuren mit Stärke, Cellulose oder anderen Polysacchariden ist aber unbekannt. Es ist bisher kein Hinweis darauf gefunden worden, daß diese Substanzen (z.B. Malatylstärke) an anderer Stelle beschrieben sind.
Es wurde auch der Versuch unternommen, mit anderen Epoxycarbonsäuren ionische Stärke- bzw. Polysaccharid-Derivate herzustellen. Dazu gehörten u.a. Epoxycrotonsäure, Epoxyzimtsäure, Epoxyacrylsäure oder Epoxyaconitsäure. Bei diesen Epoxycarbonsäuren wurden jedoch nur mittelmäßige bis schlechte Ausbeuten erzielt, so daß sich nur niedrige Substitutionsgrade einstellten.

Neben der Herstellung von Malatylstärke aus Stärke mit einer Epoxysuccinatlösung, ist die Herstellung von Malatylstärke aus festem Epoxysuccinat und alkalisierter Stärke die elegantere Methode, da hierbei nicht die Möglichkeit gegeben ist, Begleitstoffe aus der Epoxysuccinatherstellung einzubringen. Jedoch ist ein möglicher Eintrag von Begleitstoffen nicht von großer Bedeutung, da die Malatylstärke am Ende des Herstellungsprozesses aus der Suspension filtriert und mit einem Alkohol-Wasser-Gemisch gewaschen wird.

Für bessere Substitutionsausbeuten hat es sich als günstig erwiesen, mit Natronlauge einen pH-Wert von 9 - 13 in der alkoholischen Suspension einzustellen und kein höheres molares Verhältnis als 1:1 1 bis 2:1 von NaOH zu Stärke zu verwenden, sondern soweit wie möglich mit geringeren Verhältnissen zu arbeiten. Vorteilhaft ist eine NaOH-Konzentration von ca. 3 - 5 mol/l. Das Verhältnis ist auch davon abhängig, welche molare Menge an cis-Epoxysuccinat verwendet wird. Wird ein größeres molares Verhältnis von Epoxysuccinat/Stärke gewählt, so muß zur besseren Aktivierung der Stärke mehr NaOH eingesetzt werden (auch hier sollte das Limit NaOH/Stärke=1/1 bis 2/1beachtet werden). Die Ausbeuten an Epoxysuccinat betragen ca. 40 - 85 %, so daß ein Substitutionsgrad von 0,2 - 0,6 leicht einstellbar ist.
Die vollneutralisierte Malatylstärke (als Natriumsalz) mit einem Substitutionsgrad von 0,15 bis 0,6 löst sich sehr gut in kaltem Wasser, die Lösungen sind klar und haben einen pH-Wert von 7,8 - 8,1. Die nicht neutralisierte Säureform der Malatylstärke ist in Wasser schwer löslich und hat in einer 1%igen Suspension einen pH-Wert von 2,5 - 2,8.
Nach der Reaktion, kann die Malatylstärke mit Salzsäure, Essigsäure oder anderen Säuren auf einen gewünschten pH-Wert eingestellt werden. Dies wird vorteilhaft in einer alkoholischen Suspension durchgeführt, wobei der Wassergehalt des Suspensionsmediums min. 15% und max. 30% betragen sollte. Die Einstellung des pH-Wertes hat einen großen Einfluß auf die Endeigenschaften der Malatylstärke. Bei der Trocknung von teilneutralisierten Malatylstärken, die einen pH-Wert von 3,0 - 7,5 aufweisen, bilden sich inter- und intramolekulare Vernetzungen, die dazu führen, daß die Malatylstärke in Wasser unlöslich wird und viskose bis hochviskose Gele bildet. Bei gleichzeitiger Verwendung eines di- oder polyfunktionellen Vernetzers (z.B. eine organische Dichlor-Verbindung während der Reaktion) können ebenfalls stabile, gelbildende Produkte erhalten werden.

Eine weitere vorteilhafte, erfindungsgemäße Verbindung ist die Gruppe der Malatylgalaktomannane der allgemeinen Formel (IIa) auf Basis Mannose 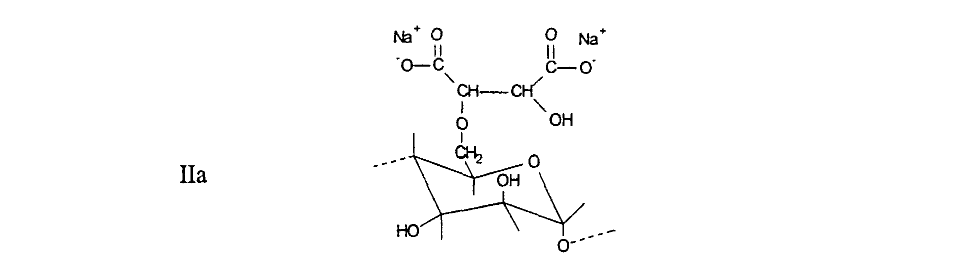 und/oder der allgemeinen Formel (IIb) auf Basis Galaktose.

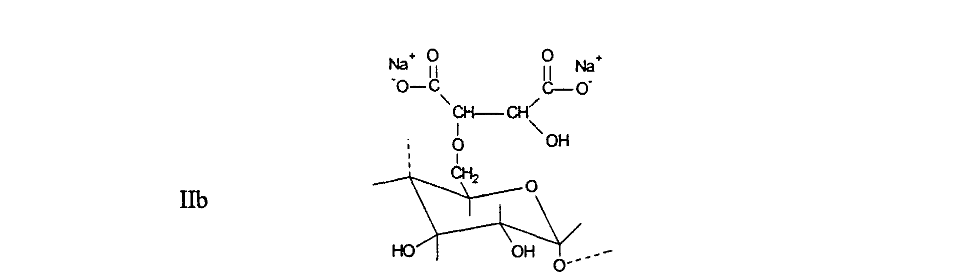

In Analogie zur Herstellung von Malatylstärke, läßt sich auch das Malatylguaran aus cis-Epoxysuccinat und Guaran darstellen. Die Herstellung von Malatylguaran erfolgt ebenfalls in Suspension. Als Vorteilhaft hat sich Methanol und Isopropanol mit ca. 20 % Wasser erwiesen. Die Alkalisierung sollte mit Natronlauge bei ca. 20 °C erfolgen. Die Ausbeuten bezogen auf cis-Epoxysuccinat sind etwas geringer als bei Malatylstärkeherstellung. Die Lösungen von Malatylguaran sind viskoser als von Malatylstärke.

Eine weitere vorteilhafte, erfindungsgemäße Verbindung ist Malatylcellulose der allgemeinen Formel (III)

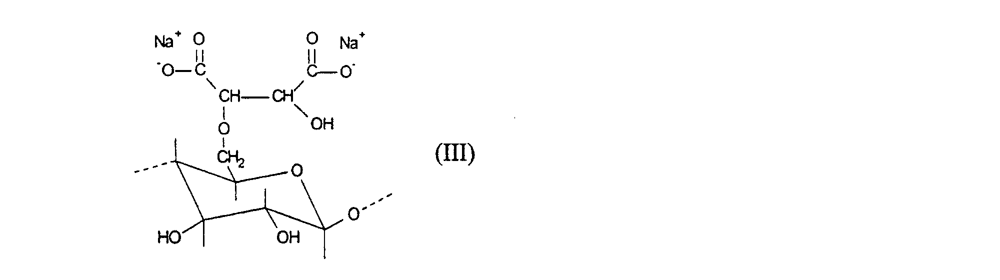

Malatylcellulose läßt sich aus Cellulose und cis-Epoxysuccinat herstellen. Vorteilhaft ist die Ausführung der Reaktion in Isopropanol mit insgesamt ca. 20 % Wasser und einer vorhergehenden Alkalisierung mit Natriumhydroxid bei ca. 15 °C. Eine Erwärmung während der Alkalisierung bringt keine Vorteile. Die Ausbeuten bezogen auf cis-Epoxysuccinat sind schlechter als bei Malatylstärkeherstellung. Die Lösungen von Malatylcellulose sind viskoser als von Malatylstärke.

Die Endeigenschaften von Malatylcellulose und -guaran lassen sich ebenfalls über die Einstellung des pH-Wertes vor der Trockung variieren, so daß sich auch hierbei Vernetzungen einstellen lassen.

Die erfindungsgemäßen Verbindungen eignen sich aufgrund ihrer Eigenschaften in ihrer unvernetzen Form, als Komplexierungsmittel für mehrwertige Kationen, z.B. in Waschmitteln oder für organische Substanzen im pharmazeutischen Bereich. In der vernetzten Form eignen sie sich als Verdickungsmittel, da sie in Wasser unlöslich sind, stark quellen und Gele bilden. Je nach Dichte der Vernetzung bilden sich leicht oder hoch viskose Gele, die beispielsweise in Hygienartikeln oder im medizinischen Bereich eingesetzt werden können. Bei sehr starker Vernetzung sind sie nur gering quellfähig und können z.B. als Ionenaustauscher für wäßrige Systeme oder als Hilfsstoff in pharmazeutischen Anwendungen (z.B. Tablettensprengmittel, Suspensionsstabilisator etc.) verwendet werden.

Nachfolgend werden Ausführungsbeispiele der Erfindung näher erläutert.

### Ausführungsbeispiel 1

### Malatylstärke aus Kartoffelstärke und Dinatrium-Epoxysuccinat aus Maleinsäure

### Schritt 1A:

Maleinsäure reagiert sehr schnell mit H₂O₂ und 2 Mol-% eines Katalysators in nur 1,5 Stunden bei 65°C vollständig zu Dinatrium-Epoxysuccinat in nahezu quantitativer Ausbeute: Maleinsäure + H₂O₂ + NaOH + Natriumwolframat (Na₂WO₄ * 2H₂O).

In einen 1-Liter-Rundkolben mit Rührer, Thermometer und Tropftrichter wird eine Lösung aus 116 g (1,0 Mol) Maleinsäure in 300 ml Wasser eingebracht. Zu dieser Lösung wird eine Lösung aus 60 g (1,5 Mol) NaOH in 100 ml Wasser zugegeben. Bedingt durch die freiwerdende Neutralisationswärme steigt die Temperatur auf ca. 70°C. In die warme Lösung werden 6,6 g (0,02 Mol) Natriumwolframat zugefügt.
Eine pH-Elektrode wird in die Lösung eingetaucht und mit 1,2 Mol 30 %-iger H₂O₂ (123 ml bzw. 136 g; bei 35 %-iger H₂O₂ sind es 103 ml bzw. 117 g) versetzt. Die exotherme Reaktion wird 15 Minuten mit einem Wasserbad bei 65°C gehalten, wobei der pH-Wert von ca. 5,5 auf 4 fällt. Mit einer Lösung aus 0,5 Mol (20 g) NaOH in 100 ml Wasser wird die Reaktionslösung durch tropfenweise Zugabe bei min. pH 4 gehalten. Nach 1 - 1,5 Stunden Rühren bei ca. 65 °C wird die Lösung auf 40 °C abgekühlt und mit dem Rest der letzten NaOH-Lösung versetzt.
Die Lösung wird bei 30 - 40 °C unter Vakuum auf ca. 300 ml eingedampft.

### Schritt 1B:

190 g (1,0 Mol) Kartoffelstärke (Feuchtigkeitsgehalt: 15 %) werden in 500 ml Ethanol in einem mit Rührer, Thermometer und Tropftrichter ausgerüstetem Vierhalsglaskolben suspendiert. Die Suspension wird unter Rühren innerhalb von 5 Min. mit 80 g einer 50 Gew.-%igen Natronlauge versetzt. Es wird 30 Min. bei einer Temperatur von 20 - 25 °C nachgerührt. Dann werden 150 ml der eingeengten Epoxysuccinat-Lösung aus Schritt 1A bei 25 °C in den Kolben gefüllt. Das Reaktionsgemisch wird innerhalb von 30 Minuten auf 70°C erwärmt und 4 Std. bei dieser Temperatur gerührt. Nach Abkühlen auf 20 - 25 °C wird die Suspension filtriert und der Rückstand zwei mal mit 80 %igem Methanol und mit reinem Methanol gewaschen. Die Malatylstärke wird bei 110 °C im Umlufttrockenschrank auf eine Restfeuchte von ca. 5 - 10 % getrocknet. Es wird ein Subsititutonsgrad DS = 0,35 erreicht (Titration der Säureform). Nachfolgend wird diese Malatylstärke mit MS/W bzw. MS35/W bezeichnet.

### Ausführungsbeispiel 2

### Malatylstärke aus Kartoffelstärke und Dinatrium-Epoxysuccinat aus Hydrochinon

### Schritt 2A:

### Dinatrium-Epoxysuccinat aus: Hydrochinon + H₂O₂ + NaOH

Die Oxidation des Hydrochinons durch Alkali und H₂O₂ verläuft - über das Chinon - genau so, wie die des Chinons selbst. Für präparative Zwecke ist es daher einfacher, vom Hydrochinon auszugehen. Die Reaktion geht unter starker Wärmeentwicklung vor sich und wird schließlich äußerst stürmisch. Bei passender Wahl der Reaktionsbedingungen und -Gefäße ist jedoch eine Kühlung unnötig.
In einem 5 Liter Becherglas mit Magnetrührer, erwärmt man unter Rühren 110 g (1 Mol) Hydrochinon zusammen mit 690 ml 35 %igem (8 Mol) H₂O₂ auf 70 - 80 °C (wobei so gut wie keine Gasentwicklung eintritt) und läßt dann aus einem Tropftrichter eine NaOH-Lösung (aus 120 g NaOH und 500 ml Wasser) so schnell bzw. so langsam zufließen, daß die stürmisch verlaufende Reaktion nicht allzu heftig wird. Die Mischung färbt sich bei NaOH-Zugabe dunkel braunrot und erwärmt sich zusätzlich. Etwa 5 Minuten nach beendeter NaOH-Zugabe ist die Umsetzung beendet und die Lösung entfärbt. Die Lösung wird bei 30 - 40 °C unter Vakuum auf 200 - 300 ml eingedampft.

### Schritt 2B:

190 g (1,0 Mol) Kartoffelstärke (Feuchtigkeitsgehalt: 15 %) werden in 500 ml Ethanol in einem mit Rührer, Thermometer und Tropftrichter ausgerüstetem Vierhalsglaskolben suspendiert. Die Suspension wird unter Rühren innerhalb von 5 Min. mit 80 g einer 50 Gew.-%igen Natronlauge versetzt. Es wird 30 Min. bei einer Temperatur von 20 - 25 °C nachgerührt. Dann werden 150 ml der eingeengten Epoxysuccinat-Lösung aus Schritt 2A bei 25 °C in den Kolben gefüllt. Das Reaktionsgemisch wird innerhalb von 30 Minuten auf 70°C erwärmt und 4 Std. bei dieser Temperatur gerührt. Nach Abkühlen auf 20 - 25 °C wird die Suspension filtriert und der Rückstand zwei mal mit 80 %igem Methanol und mit reinem Methanol gewaschen. Die Malatylstärke wird bei 110 °C im Umlufttrockenschrank auf eine Restfeuchte von ca. 5 - 10 % getrocknet. Es wird ein Subsititutonsgrad DS = 0,15 erreicht (Titration der Säureform). Nachfolgend wird diese Malatylstärke mit MS/H bzw. MS15/H bezeichnet.

### Ausführungsbeispiel 3

### Malatylstärke aus Kartoffelstärke und Dinatrium-Epoxysuccinat

### Schritt 3A:

### Herstellung von Dinatrium-Epoxysuccinat, wie in Schritt 1A. Isolierung:

Die Lösung wird bei 30 - 40 °C unter Vakuum auf 300 ml eingedampft und unter Rühren in 1,5 Liter Aceton eingebracht, um 160 g farbloses Dinatrium-Epoxysuccinat auszufällen. Das gefällte Produkt wird filtriert und mit Aceton gewaschen.

### Schritt 3B:

190 g (1,0 Mol) Kartoffelstärke (Feuchtigkeitsgehalt: 15 %) werden in 400 ml Ethanol in einem mit Rührer, Thermometer und Tropftrichter ausgerüstetem Vierhalsglaskolben suspendiert. Die Suspension wird unter Rühren innerhalb von 5 Min. mit 80 g einer 50 Gew.-%igen Natronlauge versetzt. Es wird 30 Min. bei einer Temperatur von 20 - 25 °C nachgerührt. Dann werden 150 g (0,85 Mol) festes Dinatrium-Epoxysuccinat aus Schritt 3A bei 25 °C in den Kolben portionsweise zugegeben. Das Reaktionsgemisch wird innerhalb von 30 Minuten auf 50 °C erwärmt und 4 Std. bei dieser Temperatur gerührt. Die auf 20 °C abgekühlte Suspension wird mit Essigsäure (99 %ig) auf pH 8 - 9 neutralisiert, dann filtriert und der Rückstand zwei mal mit 80 %igem Methanol und mit reinem Methanol gewaschen. Die Malatylstärke wird bei 110 °C im Umlufttrockenschrank auf eine Restfeuchte von ca. 5 - 10 % getrocknet. Es wird ein Subsititutonsgrad DS = 0,5 erreicht (Titration der Säureform). Nachfolgend wird diese Malatylstärke mit MS05 bezeichnet.

### Ausführungsbeispiel 4

### Malatylguaran aus Guarmehl und Dinatrium-Epoxysuccinat

42 g (0,26 Mol) Guarmehl (Feuchtigkeitsgehalt: 9 %) werden in 400 ml Isopropanol und 60 ml Wasser in einem mit Rührer, Thermometer und Tropftrichter ausgerüstetem Vierhalsglaskolben suspendiert. Die Suspension wird unter Rühren mit 20 g einer 50 Gew.-%igen Natronlauge versetzt. Es wird 30 Min. bei einer Temperatur von 20 °C gerührt. Dann werden 31 g (0,176 Mol) festes Dinatrium-Epoxysuccinat aus Schritt 3A bei 25 °C in den Kolben portionsweise zugegeben. Das Reaktionsgemisch wird innerhalb von 30 Minuten auf 60 °C erwärmt, 4 Std. bei dieser Temperatur gerührt und über Nacht stehen gelassen. Die abgekühlte Suspension wird mit Essigsäure (99 %ig) auf pH 8 - 9 neutralisiert, dann filtriert und der Rückstand zwei mal mit 80 %igem Methanol und mit reinem Methanol gewaschen. Das Malatylguaran wird bei 110 °C im Umlufttrockenschrank auf eine Restfeuchte von ca. 5 - 10 % getrocknet. Es wird ein Subsititutonsgrad DS = 0,4 erreicht (Titration der Säureform).

### Ausführungsbeispiel 5

### Malatylcellulose aus pulverisierter Fichtencellulose und Dinatrium-Epoxysuccinat

41 g (0,25 Mol) Cellulose (Feuchtigkeitsgehalt: 4 %) werden in 400 ml Isopropanol und 80 ml Wasser in einem mit Rührer, Thermometer und Tropftrichter ausgerüstetem Vierhalsglaskolben suspendiert. Die Suspension wird unter Rühren mit 10 g Natriumhydroxid (Schuppen) versetzt. Es wird 60 Min. bei einer Temperatur von ca. 15 °C gerührt. Dann werden 53 g (0,3 Mol) festes Dinatrium-Epoxysuccinat (s. Schritt 3A) bei 25 °C in den Kolben portionsweise zugegeben. Das Reaktionsgemisch wird innerhalb von 30 Minuten auf 70 °C erwärmt und 4 Std. bei dieser Temperatur gerührt. Die auf 25 °C abgekühlte Suspension wird mit Essigsäure (99 %ig) auf pH 8 - 9 neutralisiert, dann filtriert und der Rückstand zwei mal mit 80 %igem Methanol und mit reinem Methanol gewaschen. Die Malatylcellulose wird bei 110 °C im Umlufttrockenschrank auf eine Restfeuchte von ca. 5 - 10 % getrocknet. Es wird ein Subsititutonsgrad DS = 0,6 erreicht (Titration der Säureform).

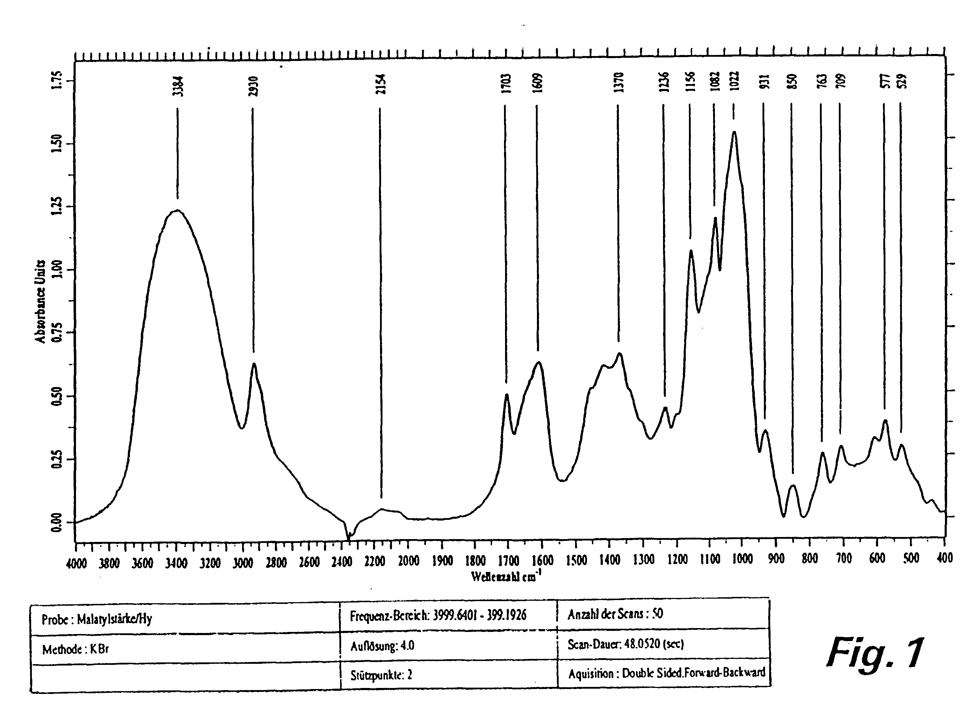

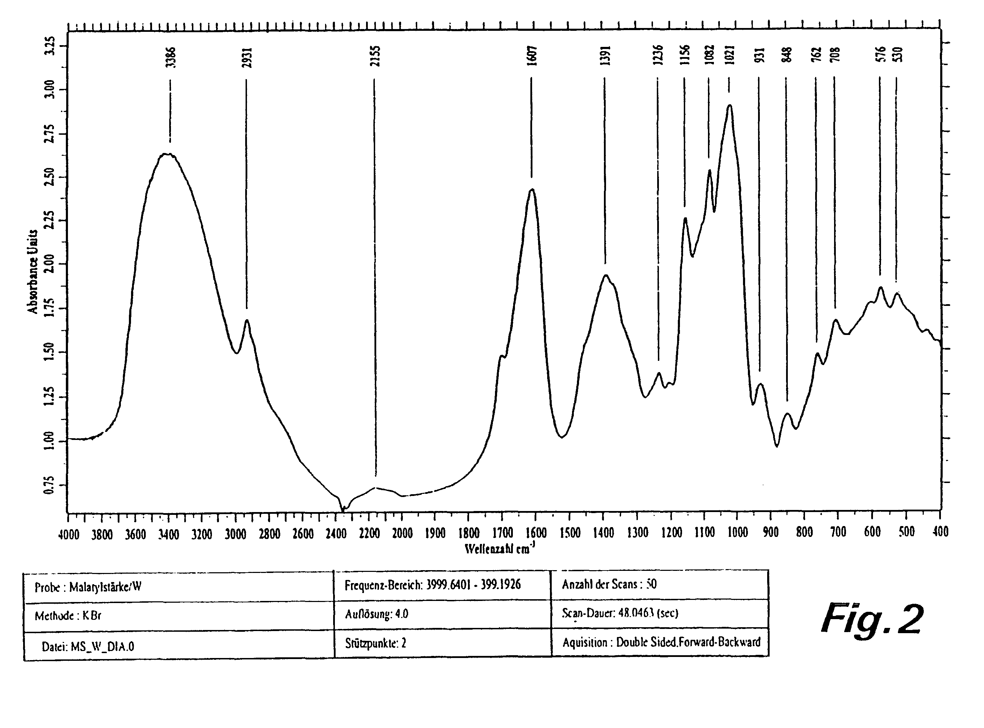

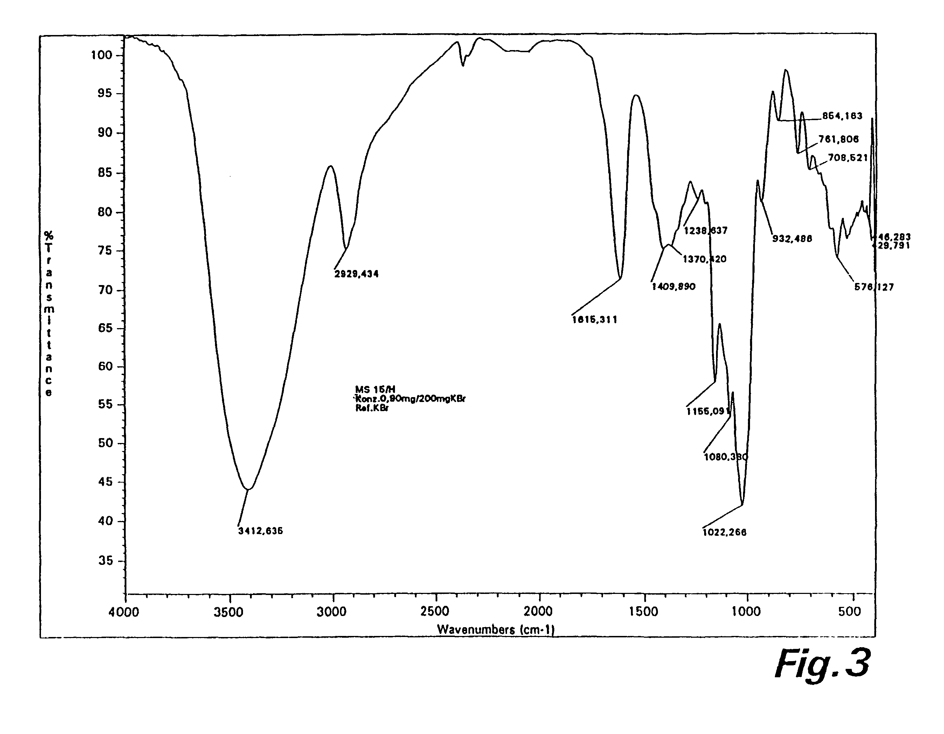

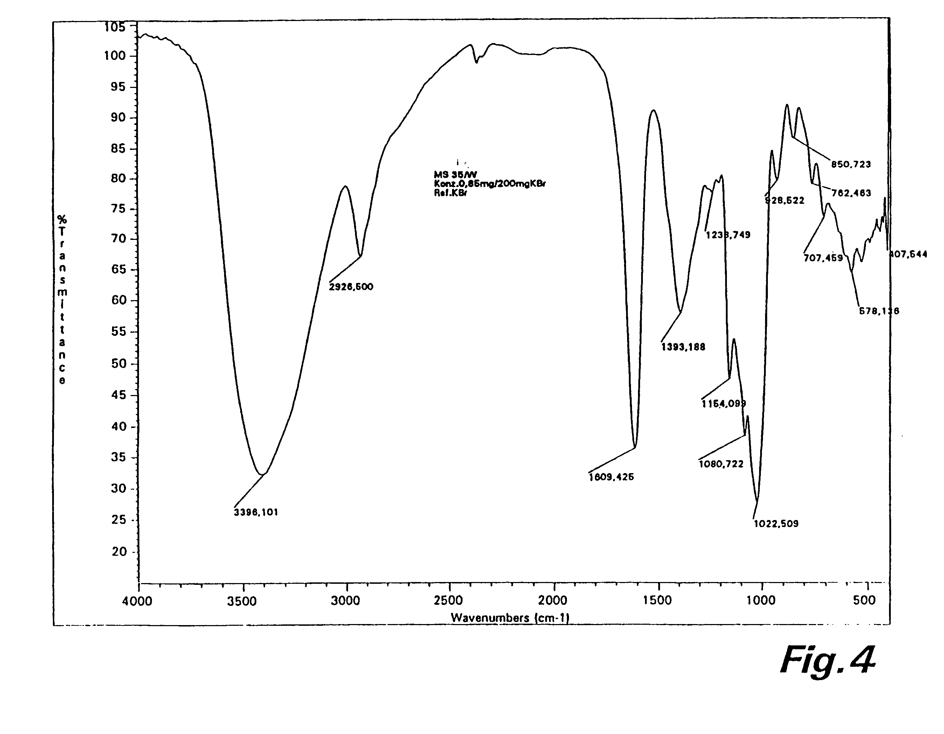

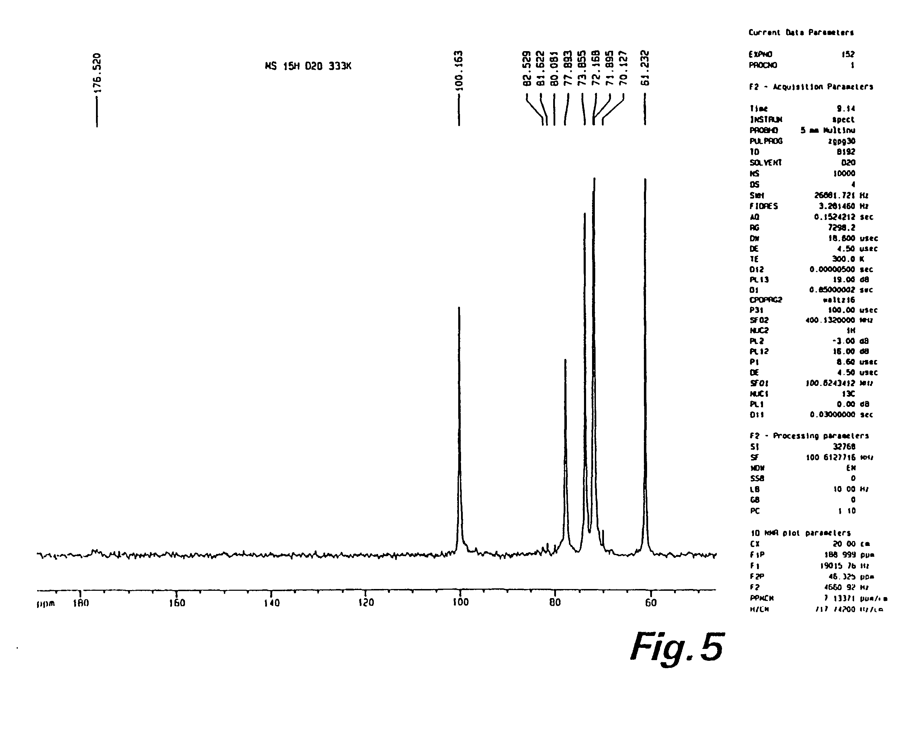

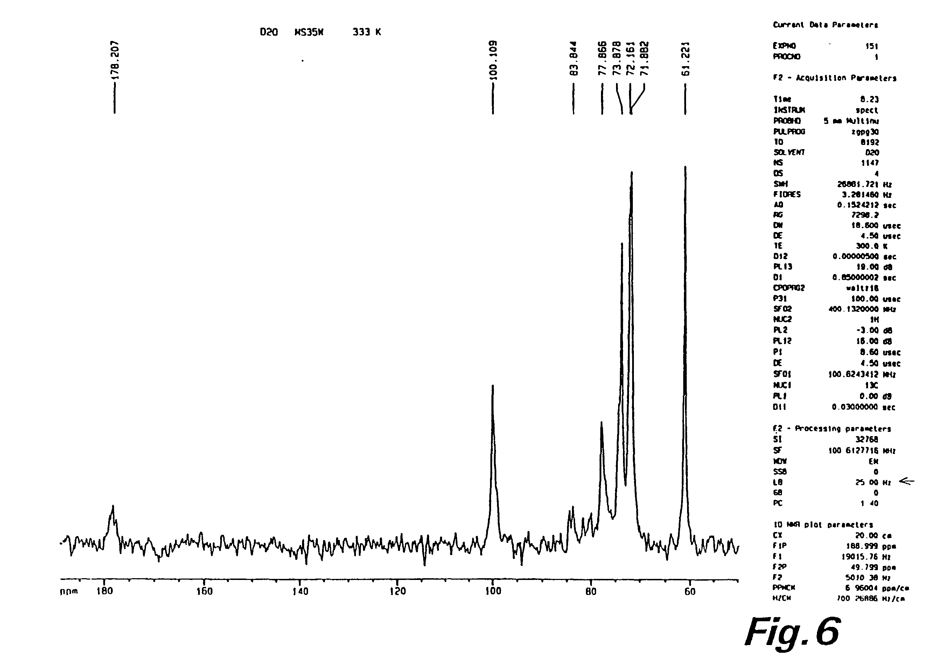

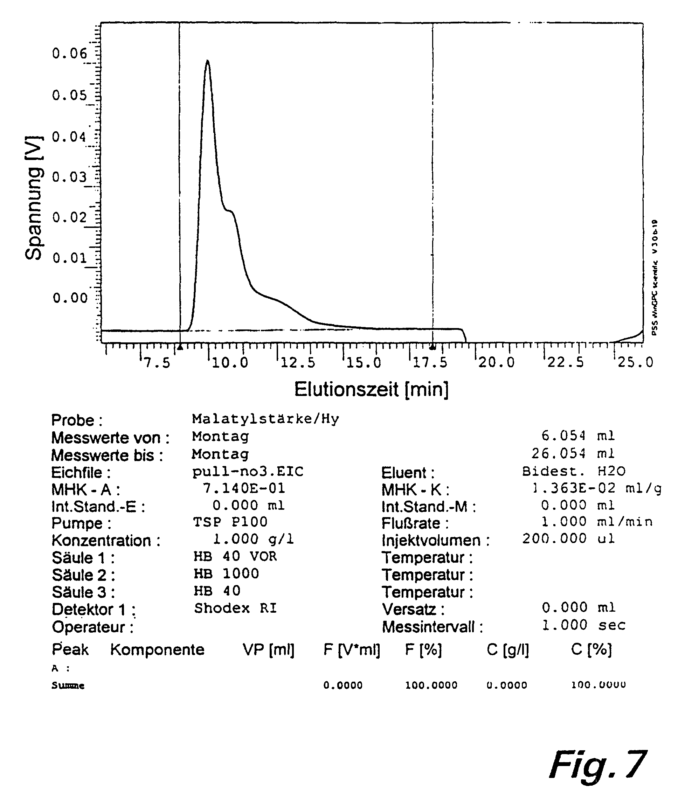

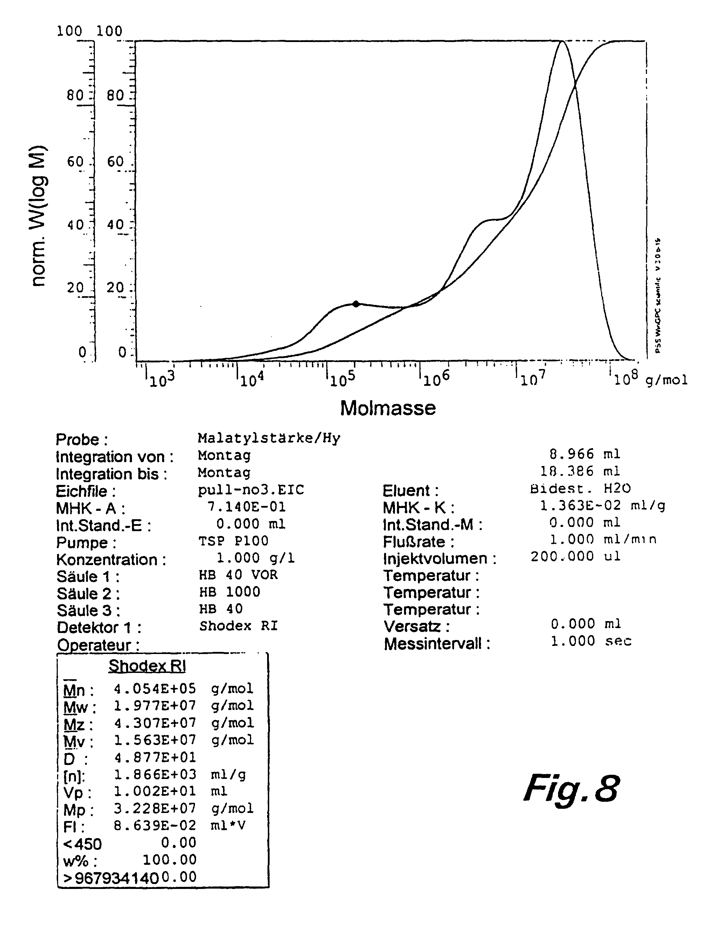

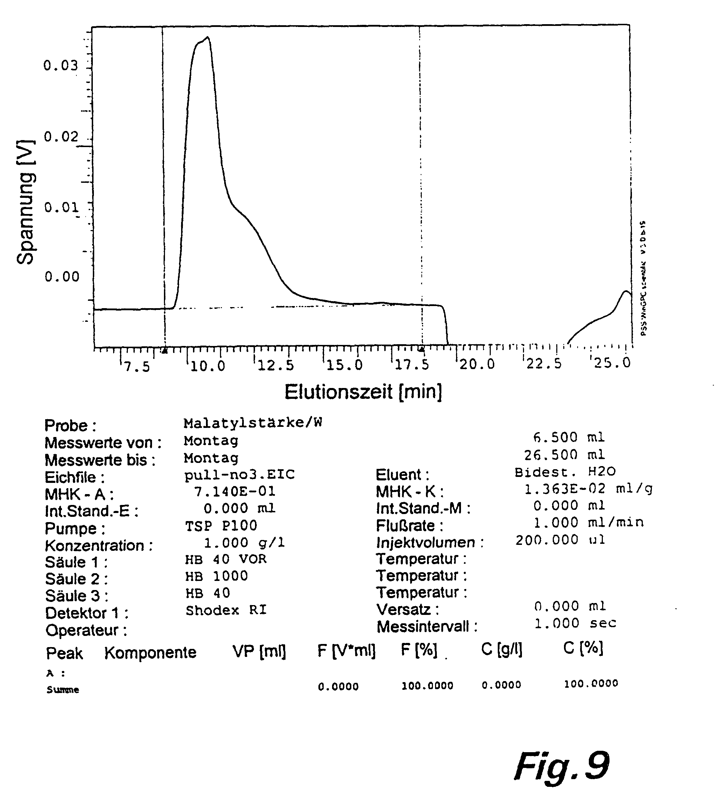

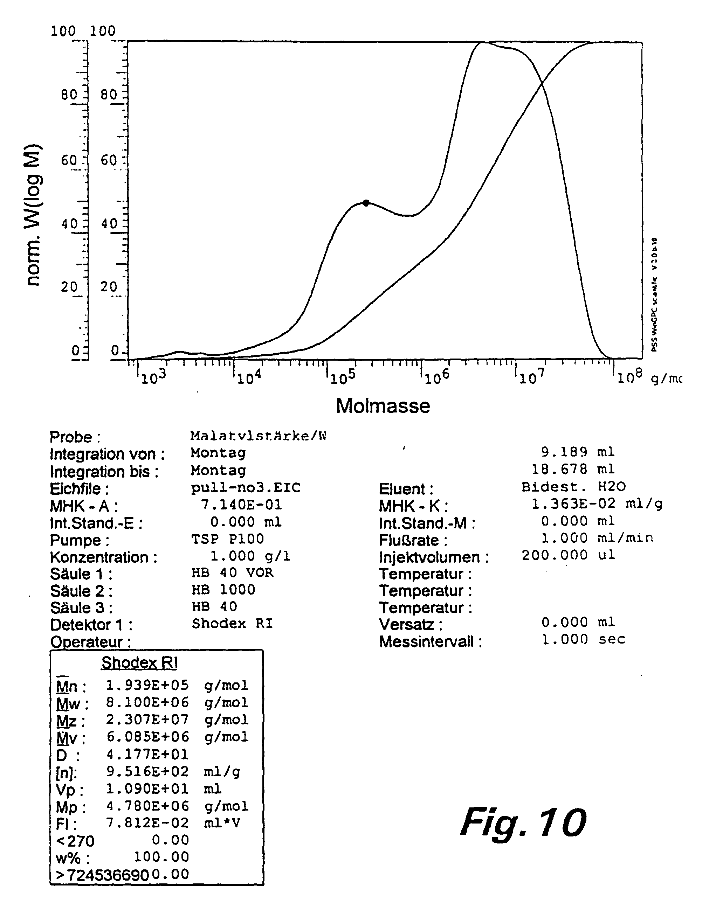

Die Strukturuntersuchungen mittels Infrarotspektroskopie (FT-IR) und Kernresonanzspektroskopie (¹³C-NMR) zeigen, daß es sich hierbei um Stärke-Derivate handelt, die eindeutig Carboxylgruppen enthalten (s. hierzu **Fig. 1 bis 4** für FT-IR und **Fig. 5 und 6** für ¹³C-NMR, sowie vergleichende Tabelle 1 und Tabelle 2). Die typischen Stärke-Banden zeigen sich bei 1021 bis 1236 cm⁻¹ und die Banden für die Carboxylgruppen sind bei 1609 bzw. 1607 cm⁻¹ (-COO⁻)und bei 1703 bzw. 1706 (-COOH) deutlich zu erkennen. Es sind dabei keine Ester-Banden bei ca. 1760 cm-1 vorhanden. Die Resonanzpeaks vom Kohlenstoff der Carboxylgruppen können bei 178,2 bzw. 176,5 ppm identifiziert werden. Auch hier fehlen Resonanzpeaks vom Ester bei ca. 160 ppm, so daß von einem Ether ausgegangen werden kann.
Die Untersuchungen mittels Gelpermeationschromatographie (GPC) zeigen eindeutig, daß es sich hierbei um die gewünschten hochmolekularen Stoffe handelt (s. dazu **Fig. 7 und 8** für MS15/H sowie **Fig. 9 und 10** für MS35/W). Die Molmassen betragen ca. 2 bis 8 Millionen g/mol. Eine 1%ige Lösung hat eine mittlere Viskosität von 500 - 1000 mPa.s (je nach Substitutionsgrad).

**Tabelle 1:**

| Vergleiche der Banden (cm⁻¹) der FT-IR-Spektren (Fig. 1 und 2) | | |
|---|---|---|
| **MS35/W** | **MS15/H** | **Kartoffelstärke** |
| 530 | 529 | 525 |
| 576 | 577 | 580 |
| - - | - - | 615 |
| 708 | 709 | 710 |
| 762 | 763 | 762 |
| 848 | 850 | 855 |
| 931 | 931 | 931 |
| *1021* | *1022* | *1022* |
| *1082* | *1082* | *1081* |
| *1156* | *1156* | *1158* |
| *1236* | *1236* | *1236* |
| 1391 | 1370 | 1364 |
| **1607** | **1609** | **- -** |
| - - | - - | 1650 |
| **1706** | **1703** | - - |

**Tabelle 2:**

| Vergleiche der Resonanzpeaks (ppm) der ¹³C-NMR-Spektren (Fig. 5 und 6). | |
|---|---|
| **MS15/H** | **MS35/W** |
| 61.2 | 61.2 |
| 70.1 | |
| 71.8 | 71.8 |
| 72.1 | 72.1 |
| 73.8 | 73.8 |
| 77.8 | 77.8 |
| 80.0 | |
| 81.6 | |
| 82.5 | 83.8 |
| 100.1 | 100.1 |
| **176.5** | **178.2** |

Die Malatyl-Derivate sind stabil und lassen sich problemlos lagern, so daß sich keine Struktur- oder Eigenschaftsänderungen ergeben (bei durchschnittlich 25 ± 3 °C und 60 ± 5 % Luftfeuchtigkeit).

### Ausführungsbeispiel 6

### Verwendung als Komplexierungsmittel

Die Bestimmung erfolgt nach der Calciumcarbonat-Methode. Dazu werden 1 g Malatylstärke in 100 ml destilliertem Wasser gelöst, mit 10 ml einer 2%igen Natriumcarbonat-Lösung versetzt und mit einer Calciumacetat-Monohydrat-Lösung (mit 44,1 g/l) bis zur dauernden Trübung titriert.

**Tabelle 3:**

| Komplexierungsergebnisse | | |
|---|---|---|
| Substanz | DS | mg/g |
| Malatylstärke MS/H | 0.15 | 110 |
| Malatylstärke MS/W | 0.35 | 225 |
| Malatylstärke MS05 | 0.5 | 320 |
| Bernsteinsäure. Dinatrium (Vergleich) | | 250 |
| Pentanatriumtriphosphat (Vergleich) | | 200 |

Nach dieser Methode ist das Komplexierungsverhalten der erfindungsgemäßen Substanz Malatylstärke besser als das der reinen Bernsteinsäure und des Pentanatriumtriphosphates, bezogen auf die eingesetzte Masse (in mg/g). Zudem wurde beobachtet, daß die gebildete Trübung (CaCO₃) beim Einsatz von Malatylstärke sich nicht sofort absetzte, sondern die Sedimentation der Trübung mehrere Stunden dauerte und beim Einsatz von MS/H sich erst nach Tagen absetzte.

## Patentansprüche

1. Malatyl-Polysaccharide erhältlich durch Umsetzung von Polysacchariden und cis-Epoxysuccinat oder Epoxycarbonsäuren.

2. Verbindung nach Anspruch 1, nämlich Malatylstärke der allgemeinen Formel (I)

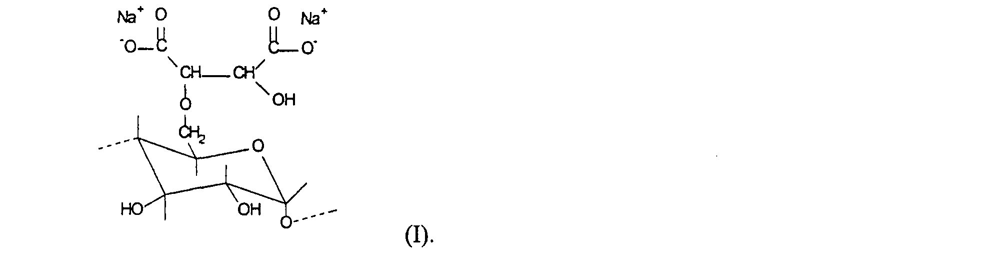

3. Verbindung nach Anspruch 1, nämlich Malatylgalaktomannan der allgemeinen Formel 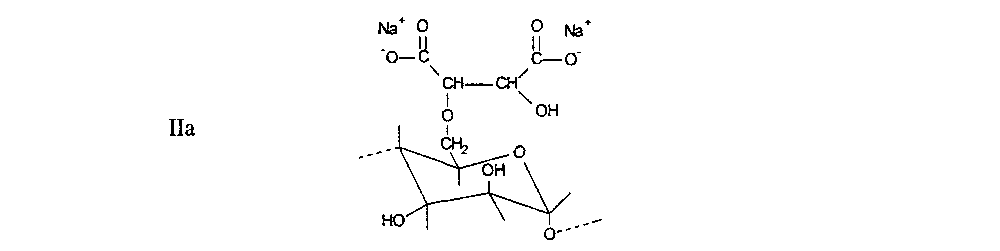 und/oder

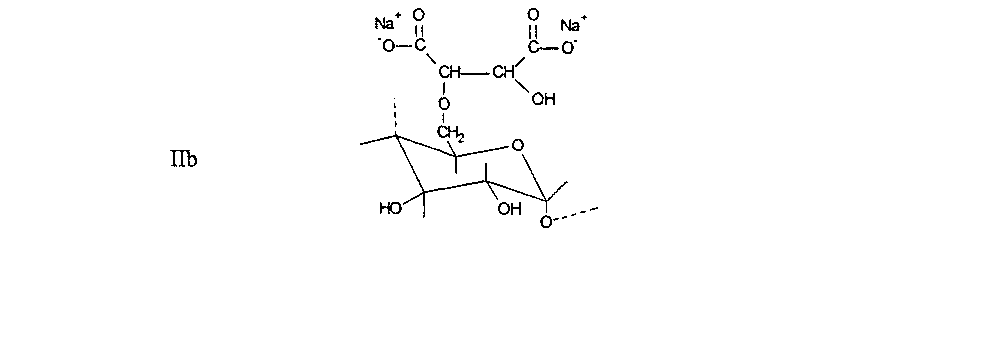

4. Verbindung nach Anspruch 1, nämlich Malatylcellulose der allgemeinen Formel (III).

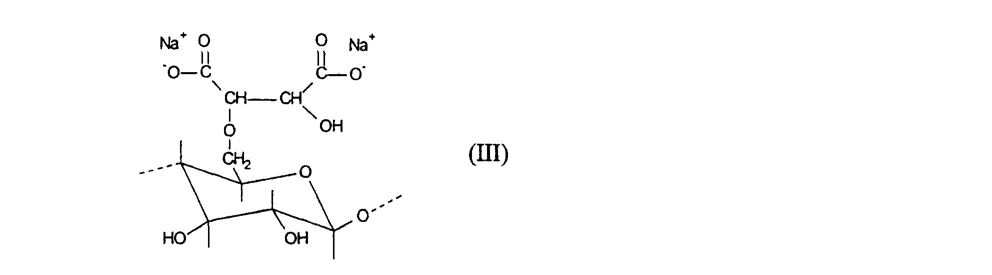

5. Verfahren zur Herstellung von Verbindungen nach Anspruch 1, **dadurch gekennzeichnet, daß** man Polysacharide mit cis-Epoxysuccinat oder analogen Epoxycarbonsäuren umsetzt.

6. Verfahren nach Anspruch 5, **dadurch gekennzeichnet, daß** die Reaktion und die Umsetzung von Polysacchariden mit Epoxysuccinat in Suspension oder in einer Festphasenreaktion durchgeführt wird.

7. Verwendung von Verbindungen nach einem der Ansprüche 1 bis 4 als Verdickungsmittel oder als Komplexierungsmittel für Kationen oder organische Verbindungen oder als Ionentauscher für wäßrige Systeme oder als Hilfsstoff in pharmazeutischen Anwendungen (z.B. Tablettensprengmittel, Suspensionsstabilisator etc.) oder als Inhaltsstoff für Hygieneartikel.

## Claims

1. Malatyl polysaccharides obtainable through conversion of polysaccharides and cis-epoxy succinate or epoxy carbonic acids.

2. Compound according to claim 1, namely malatyl starch of the general formula (I).

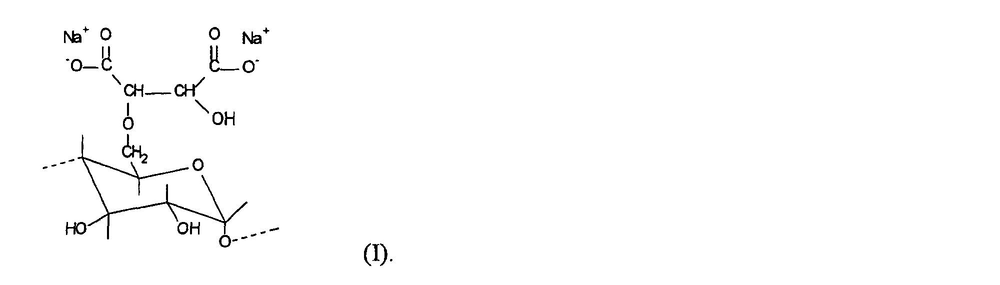

3. Compound according to claim 1, namely malatyl galactomannan of the general formula 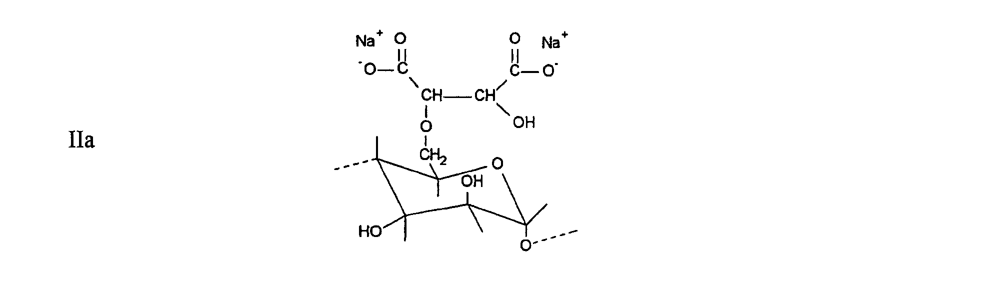 and/or

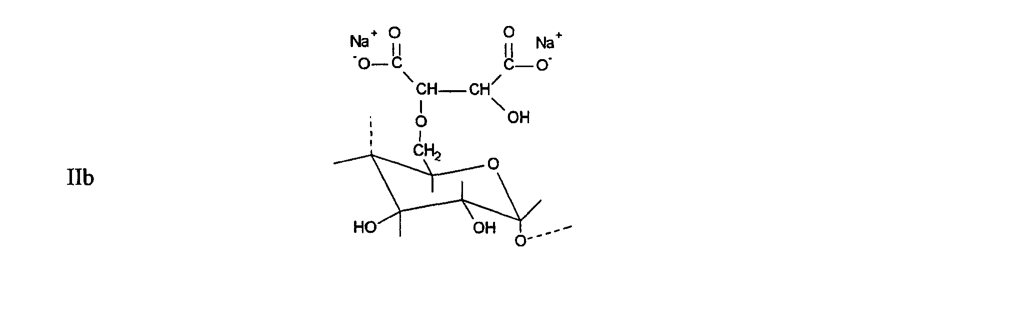

4. Compound according to claim 1, namely malatyl cellulose of the general formula (III).

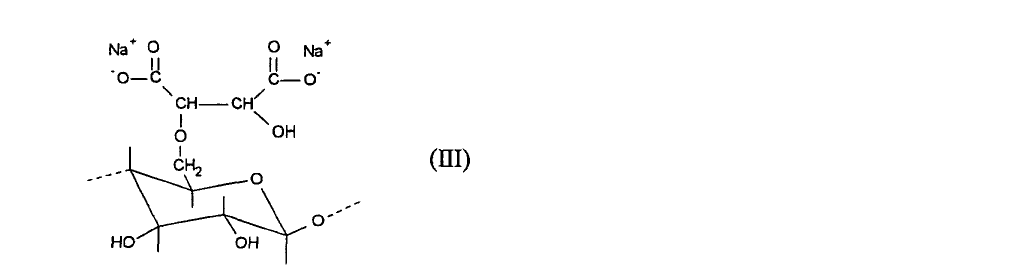

5. Method for preparing compounds according to claim 1, **characterised in that** polysaccharides are converted with cis-expoxy succinate or analogous epoxy carbonic acids.

6. Method according to claim 5, **characterised in that** the reaction and the conversion of polysaccharides with epoxy succinate is performed in suspension or in a solid phase reaction.

7. Use of compounds according to any one of claims 1 to 4 as thickening agent or as complexing agent for cations or organic compounds or as ion exchang material for aqueous systems or as auxiliary product in pharmaceutical applications (e.g. tablet disintegrant, suspension stabiliser etc.) or as ingredient for sanitary products.

## Revendications

1. Malatyl polysaccharides obtenus par réaction entre des polysaccharides et cis-époxy-succinate ou des acides organiques d'époxy.

2. Composé selon la revendication 1, dénommé malatyl amidon (I) représenté par la formule générale (I)

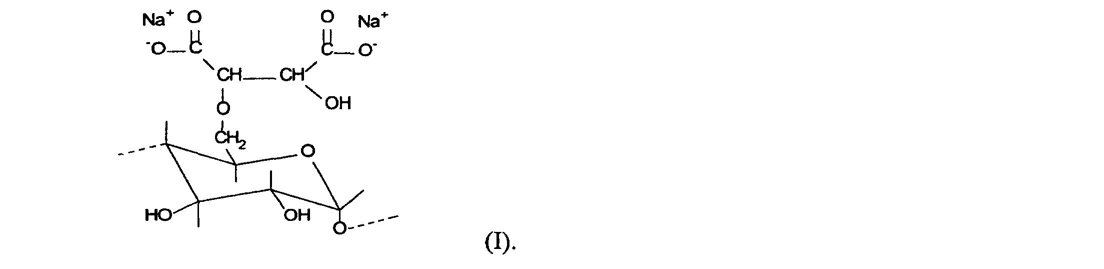

3. Composé selon la revendication 1, dénommé malatyl galacto mannan représenté par la formule générale 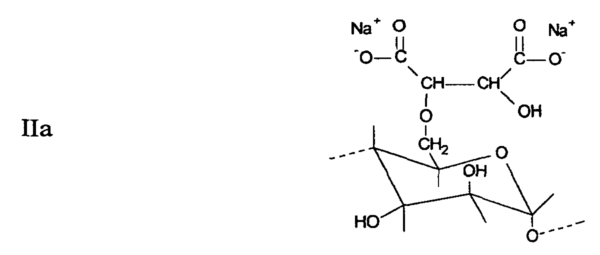 et/ou

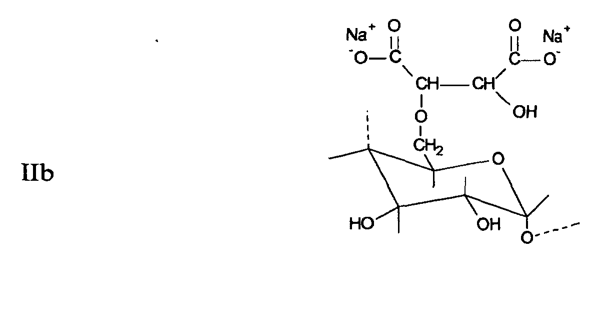

4. Composé selon la revendication 1, dénommé malatyl cellulose représenté par la formule générale (III).

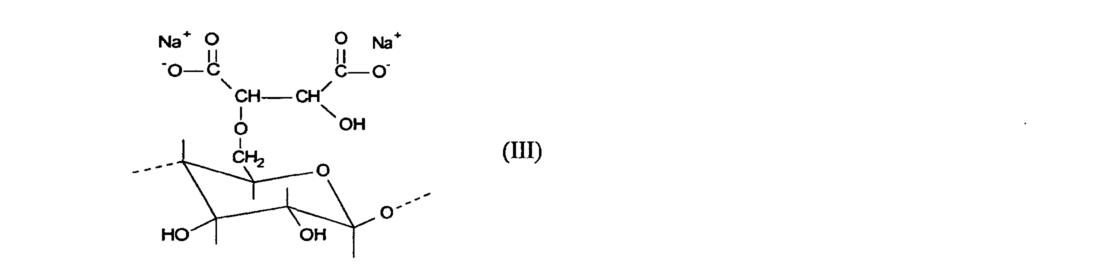

5. Procédé de préparation des composés selon la revendication 1, **caractérisé par** réaction des polysaccharides avec cis-époxy-succinate ou des acides organiques analogues d'époxy.

6. Procédé selon la revendication 5, **caractérisé par** faire la réaction et la conversion des polysaccharides avec cis-époxy-succinate en suspension ou dans une réaction en phase solide.

7. Utilisation des composés selon l'une quelconque des revendications 1 à 4 comme agent épaisseur ou comme agent pour complexer des cations ou des composés organiques ou comme échangeur d'ions pour des systèmes aqueux ou comme agent auxiliaire dans des applications pharmaceutiques (par exemple agent désintégrant pour comprimés, stabilisateur des suspensions etc.) ou comme intégrient dans des articles d'hygiène
